# EUROPEAN PATENT APPLICATION

(11) **EP 2 988 478 A1**
(43) Date of publication of application: **24.02.2016**
(21) Application number: 15175840.6
(22) Date of filing: 08.07.2015
(51) Int. Cl.: H04M 1/02, H04M 1/04, H04M 1/18, H04B 1/3888, G06F 1/16, A45C 11/00

(54) **PROTECTIVE COVER**

(30) Priority: 18.08.2014 US 201462038397 P
(71) Applicant: Taer Innovation Co., Ltd., New Tapei City 24886 (TW)
(72) Inventor: WANG, Chih-Sheng, 24886 New Taipei City (TW)
(74) Representative: Viering, Jentschura & Partner mbB Patent- und Rechtsanwälte

(57) **Abstract**

A protective cover (1) for a portable device is provided. The protective cover (1) includes a first frame (110, 110') and a second frame (120, 120'). The first frame (110, 110') has a pivot groove (111) and the second frame (120, 120') includes a pivot end (121, 121'). The pivot end (121, 121') is removably disposed in the pivot groove (111, 111'). The second frame (120, 120') can be rotated relative to the first frame (110, 110'), so that the first frame (110, 110') and the second frame (120, 120') can be separated or engaged. While the first frame (110, 110') and the second frame (120, 120') are engaged, the first frame (110, 110') and the second frame (120, 120') define an accommodating space (S) for receiving the portable device.

## Description

### BACKGROUND OF THE INVENTION

### 1. Field of the Invention

The present disclosure relates to a protective cover; in particular to a protective cover for accommodating a portable device.

### 2. Description of Related Art

With advancement of technology, portable devices such as smart phones, tablet PCs or personal laptops have become more diverse in their functions and applications. Users can use portable devices to make phone calls, connect to the internet, watch videos, listen to music, or carry out word processing tasks.

However, portable devices on the current market are usually cuboids, corners are which are vulnerable to impact and damages caused thereby. Additionally, screens of portable devices are being damaged by scratching or impacts from external forces.

### SUMMARY OF THE INVENTION

The object of the present disclosure is to provide a protective cover for accommodating and protecting a portable device.

In order to achieve the aforementioned object, according to an embodiment of the present disclosure, a protective cover includes: a first frame, a second frame, and at least one fixing unit. One side of the first frame is formed with at least one pivot groove. One side of the second frame is formed with at least one pivot end. The pivot end is removably engaged to the pivot groove, such that the second frame is rotatable with respect to the first frame, so that the second frame and the first frame can be parted from or closed upon each other. The pivot groove has an alignment hole. The pivot end has a through hole. When the pivot end is disposed in the pivot groove, the through hole is aligned with the alignment hole. The fixing unit is inserted into the through hole and the alignment hole, pivotally connecting the pivot end in the pivot groove. When the first frame and the second frame are closed upon each other, the first frame and the second frame define an accommodating space therebetween for accommodating a portable device.

In summary of the above, the present disclosure provides a protective cover for accommodating and protecting a portable device. The protective cover includes a first frame, a second frame, and a fixing unit (e.g. a pivot shaft). The first frame and the second frame can pivot about each other through the fixing unit, so that the first frame and the second frame can be parted from or closed upon each other. When the first frame and the second frame are closed upon each other, an accommodating space is defined therebetween for accommodating a portable device, thereby protecting the portable device from impacts and scratching.

In order to further the understanding regarding the present disclosure, the following embodiments are provided along with illustrations to facilitate the disclosure of the present disclosure.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of illustrative embodiments when read in conjunction with the accompanying drawings, wherein:
Fig. 1 shows a perspective view of a protective cover in a state of use according to a first embodiment of the present disclosure;
Fig. 2 shows a perspective view of a protective cover in another state of use according to a first embodiment of the present disclosure;
Fig. 3A shows an enlarged view of a portion of a protective cover according to a first embodiment of the present disclosure;
Fig. 3B shows an enlarged exploded view of a portion of a protective cover according to a first embodiment of the present disclosure;
Fig. 4 shows an exploded view of a protective cover according to a first embodiment of the present disclosure;
Fig. 5 shows a cross-sectional view of a protective cover according to a first embodiment of the present disclosure;
Fig. 6A shows an enlarged view of a portion of a protective cover according to a second embodiment of the present disclosure;
Fig. 6B shows an enlarged exploded view of a portion of a protective cover according to a second embodiment of the present disclosure; and
Fig. 7 shows a perspective view of a protective cover according to a third embodiment of the present disclosure.

### DETAILED DESCRIPTION OF THE PREFERRED EMBODIMENTS

The instant disclosure will be described more specifically with reference to the following embodiments. It is to be noted that the following descriptions of preferred embodiments are provided herein for the purpose of illustration and description. It is not intended to be exhaustive or limiting to the precise form disclosed.

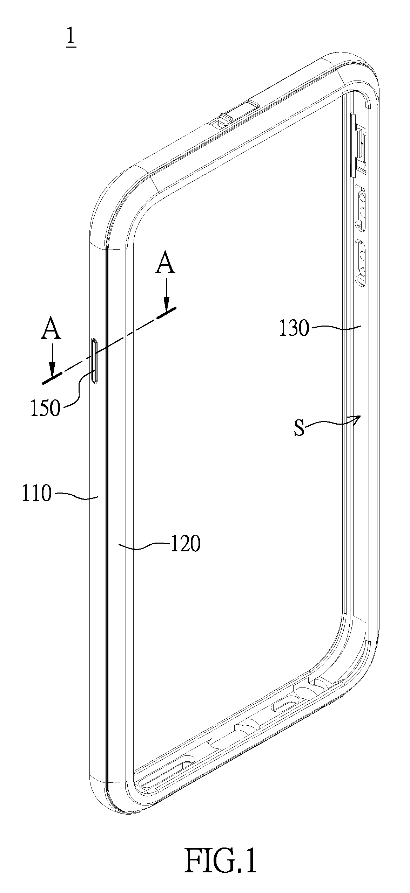

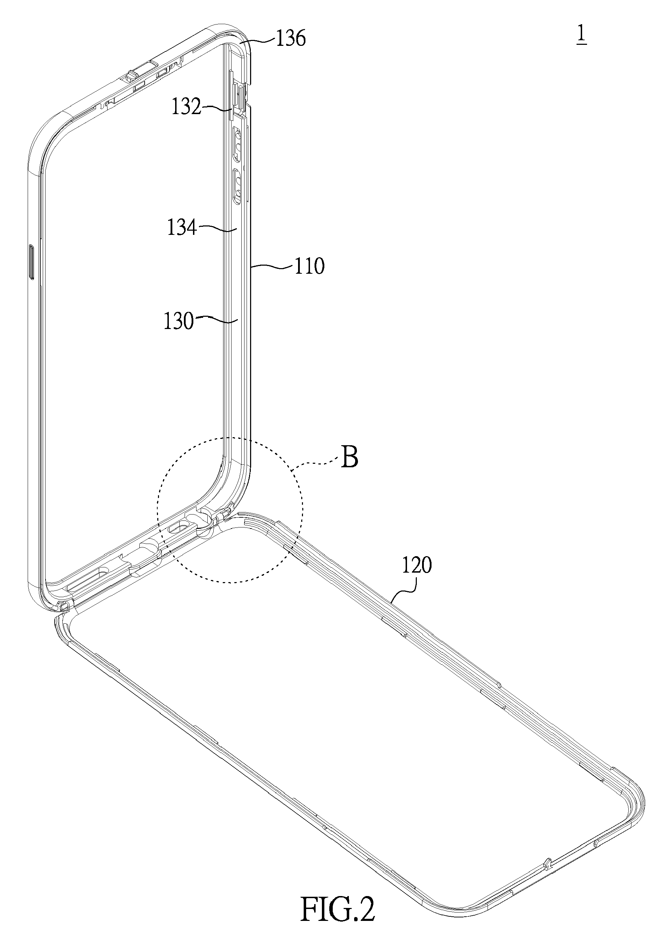

Fig. 1 shows a perspective view of a protective cover in a state of use according to a first embodiment of the present disclosure. Fig. 2 shows a perspective view of a protective cover in another state of use according to a first embodiment of the present disclosure. Referring to Fig. 1 and Fig. 2, a protective cover 1 includes a first frame 110, a second frame 120, and a buffer pad 130. A bottom portion of the first frame 110 and a bottom portion of the second frame 120 are connected, and the second frame 120 can rotate with respect to the first frame 110. Specifically, the second frame 120 can rotate to be closed upon the first frame 110 as shown in Fig. 1, or rotate to open from the first frame 110 as shown in Fig. 2.

As shown in Fig. 1, when the first frame 110 and the second frame 120 are closed upon each other, the first frame 110 and the second frame 120 define an accommodating space S. Portable devices such as smart phones and tablet PCs can be disposed in the accommodating space S. In other words, the protective cover 1 of the present disclosure serves to accommodate and protect a portable device. During use, when the first frame 110 and the second frame 120 are parted from each other, a portable device can be disposed on the first frame 110, wherein the front side of the portable device faces toward the first frame 110. Then, the first frame 110 and the second frame 120 can be closed upon each other for accommodating the portable device in the accommodating space S.

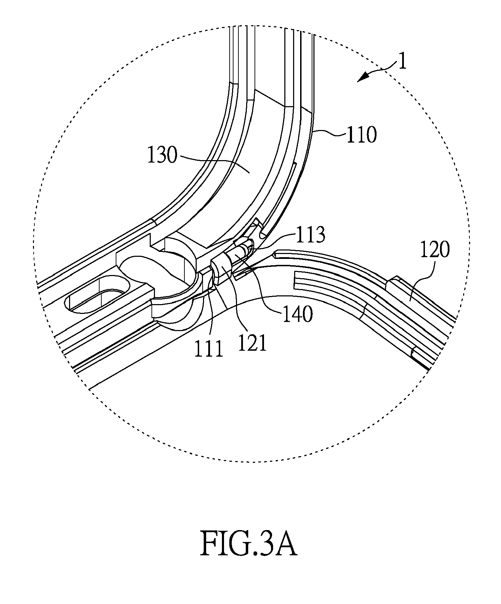

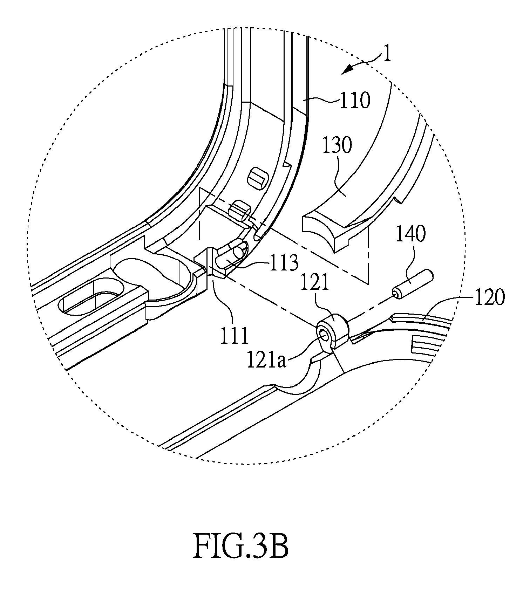

The following describes connection between the first frame 110 and the second frame 120. Fig. 3A shows an enlarged view of a portion of a protective cover according to a first embodiment of the present disclosure. Fig. 3B shows an enlarged exploded view of a portion of a protective cover according to a first embodiment of the present disclosure. The enlarged portion shown in Fig. 3A and Fig. 3B is the portion B of Fig. 2. Referring to Fig. 2 and Fig. 3A, two pivot grooves 111 are arranged respectively at two sides of the bottom portion of the first frame 110, and two accommodating grooves 113 are arranged respectively at two sides of the bottom portion of the first frame 110. The bottom portion of the second frame 120 are each formed with a pivot end 121. Each of the pivot ends 121 is configured to align with the respective pivot groove 111. Additionally, the protective cover 1 includes a pivot shaft 140.

As shown in Fig. 3A and Fig. 3B, the pivot groove 111 is adjacent to and in fluid communication with the accommodating groove 113. The pivot end 121 is formed with a through hole 121 a. One end of the pivot shaft 140 is inserted in the pivot end 121, and the other end of the pivot shaft 140 protrudes from the pivot end 121. When connecting the first frame 110 and the second frame 120, the pivot end 121 inserted with the pivot shaft 140 is pivotally connected in the pivot groove 111, and the pivot shaft 140 protruding from the pivot end 121 is snapped into the accommodating groove 113.

Specifically, through engagement between one end of the pivot shaft 140 and the accommodating groove 113, the second frame 120 is pivotally connected to the first frame 110. Through insertion of the pivot shaft 140 into the pivot end 121 of the second frame 120, the second frame 120 can pivot about the pivot shaft 140. Additionally, the pivot shaft 140 is snapped into the accommodating groove 113 and can be removed therefrom. In other words, the second frame 120 is removably pivotally connected to the first frame 110.

Of particular note, in the present embodiment, the pivot grooves 111, the accommodating grooves 113, the pivot ends 121 and the pivot shafts 140 each amount to two units arranged respectively at two sides of the bottom portion of the first frame 110 or the second frame 120. However, in other embodiments, the quantities of the pivot grooves, the accommodating grooves, the pivot ends or the pivot shafts can be one or more. The pivot grooves, the accommodating grooves, the pivot ends and the pivot shafts can be corresponding arranged at a side or at a top portion of the first frame and the second frame. The present disclosure is not limited thereto.

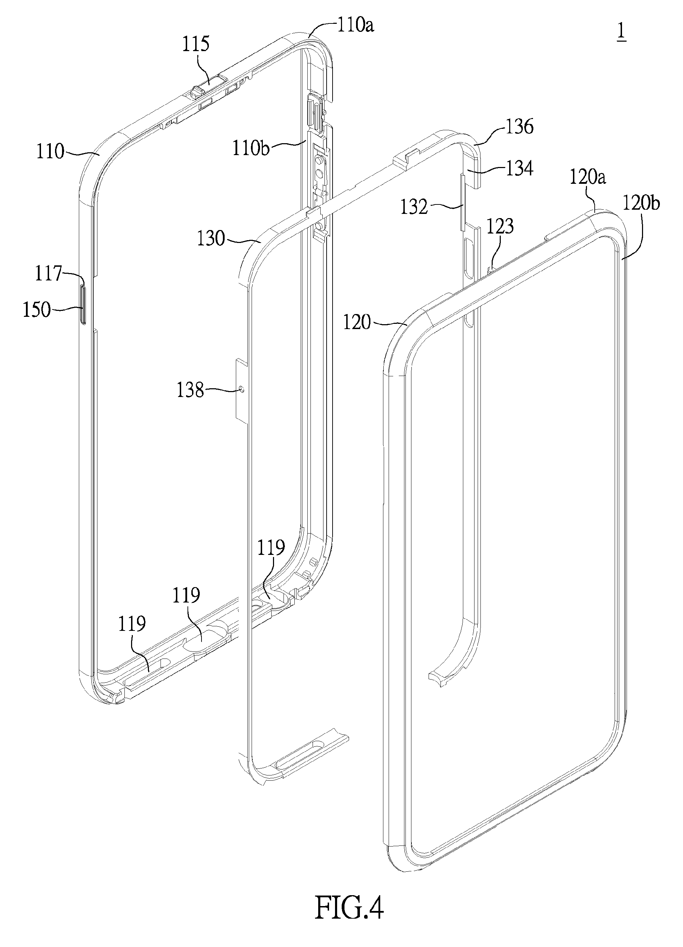

Fig. 4 shows an exploded view of the protective cover 1 according to the first embodiment of the present disclosure. Specifically, the first frame 110 includes a first side wall 110a and a first extension portion 110b. The first side wall 110a and the first extension portion 110b are connected. The first extension portion 110b extends toward the center of the first frame 110. The second frame 120 includes a second side wall 120a and a second extension portion 120b. The second side wall 120a and the second extension portion 120b are connected. The second extension portion 120b extends toward the center of the second frame 120. When the first frame 110 and the second frame 120 are closed upon each other, the first side wall 110a and the second side wall 120a are connected, and the first extension portion 110b and the second extension portion 120b are facing each other and arranged at opposite sides of the protective cover 1.

Additionally, the first frame 110 can be formed with a plurality of touch key windows 117 or port windows 119, arranged according to positions of keys (e.g. power key, volume key) and output ports (e.g. headphone port, power connector) of the portable device accommodated in the accommodating space S, such that the keys are exposed at the touch key windows 117 and the output ports are exposed at the port windows 119.

Referring to Fig. 4, the protective cover 1 includes a buffer pad 130 disposed inside the first frame 110. The buffer pad 130 can be partitioned into a first buffer portion 132, a second buffer portion 134, and a third buffer portion 136. The first buffer portion 132, the second buffer portion 134 and the third buffer portion 136 are connected to each other, and the second buffer portion 134 is positioned between the first buffer portion 132 and the third buffer portion 136. Referring to Fig. 2 and Fig. 4, the first buffer portion 132 contacts the first extension portion 110b, and the second buffer portion 134 contacts the first side wall 110a. Additionally, when the first frame 110 and the second frame 120 are closed upon each other, the third buffer portion 136 is positioned between the first side wall 110a and the second side wall 120a.

In practice, when a portable device is accommodated in the accommodating space S, the buffer pad 130 is sandwiched between the first frame 110 and the portable device, and serves as a buffer layer between the portable device and the first frame 110 and the second frame 120. Specifically, the first buffer portion 132 is sandwiched between the first extension portion 110b and the portable device, and the second buffer portion 134 is sandwiched between the first side wall 110a and the portable device.

Of particular note, referring to Fig. 3A and Fig. 3B, the second buffer portion 134 of the buffer pad 130 covers the pivot groove 111, the accommodating groove 113, the pivot end 121 and the pivot shaft 140. When the portable device is accommodated in the accommodating space S, the second buffer portion 134 is positioned between the first frame 110 and the portable device, and restricts the pivot end 121 and the pivot shaft 140 to the pivot groove 111 and the accommodating groove 113. In other words, the buffer pad 130 abuts the pivot end 121 and the pivot shaft 140 and fixes the pivot end 121 and the pivot shaft 140 to the pivot groove 111 and the accommodating groove 113, such that the pivot end 121 and the pivot shaft 140 do not easily separate from the pivot groove 111 and the accommodating groove 113.

Additionally, the material of the first frame 110 and the second frame 120 can be hard, such as carbonate polyester or metal. When the portable device is accommodated in the accommodating space S, the first frame 110 and the second frame 120 reduce damage to the portable device due to dropping or scratching. The buffer pad 130 provides further cushioning for absorbing impacts. Furthermore, when the portable device is accommodated in the accommodating space S, the buffer pad 130 prevents scratching between the portable device and the first frame 110.

In other embodiments, the first frame 110 and the second frame 120 can be made of more shock-absorbing material such as silicone or polyurethane. When the portable device is dropped or subjected to impact, the first frame 110 and the second frame 120 can absorb force from the impact, reducing chances of damage to the portable device. When the first frame 110 and the second frame 120 are made of shock-absorbing material, the buffer pad 130 is not necessary. Additionally, in other embodiments, the first frame 110 and the second frame 120 can be respectively made of different materials. For example, in order to prevent the protective cover 1 from interfering with communication of the portable device 1, the first frame 110 can be made of metal and the second frame 120 can be made of silicone or plastic. Alternately, the first frame 110 can be made of silicone or plastic, and the second frame 120 can be made of metal. The present disclosure is not limited thereto.

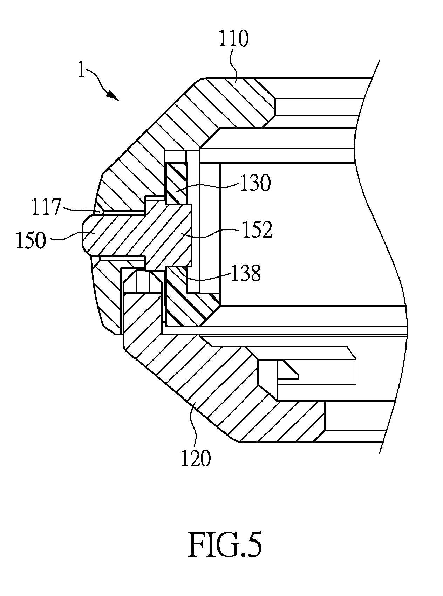

The protective cover 1 of the present embodiment further includes a key 150 disposed in the touch key window 117 of the first frame 110. Fig. 5 shows a cross-section of the protective cover 1 along line A-A' of Fig. 1 according to the first embodiment of the present disclosure. Specifically, the key 150 includes a protruding portion 152, and the buffer pad 130 includes a fixing hole 138. During assembly, the key 150 is pushed from inside the first frame 110 outward, and assembled in the touch key window 117. The protruding portion 152 of the key 150 extends toward the center of the first frame 110, and passes through the fixing hole 138 of the buffer pad 130 touching the first frame 110. When the portable device is accommodated in the accommodating space S, the buffer pad 130 fixes the key 150 between first frame 110 and the portable device, and the protruding portion 152 is aligned with a key on the portable device.

Of particular note, since the key 150 is already fixed between the first frame 110 and the portable device, the key 150 does not need to be further locked to the first frame 110. Additionally, alignment of the protruding portion 152 with the key on the portable device not only protects the key from scratches and impacts, but can also assist in the pressing of said key of the portable device. Of particular note, in the present embodiment, the quantity and positions of the keys 150 are arranged according to the quantity and positions of keys of the portable device, such that the portable device can be entirely covered and protected by the protective cover 1.

Referring to Fig. 4, the first frame 110 can be formed with a latch groove 115, and the second frame can be formed with a latch hook 123. When the first frame 110 and the second frame 120 are closed upon each other, the latch hook 123 is latched onto the latch groove 115, for fastening the first frame 110 and second frame 120. In practice, the portable device is accommodated in the accommodating space S, and when the first frame 110 and the second frame 120 are closed upon each other, the portable device is protected in the protective cover 1.

Additionally, the protective cover 1 can further include a fixing stand (not shown in the figures) such as a pod, and the first frame 110 can further include a fixing groove (not shown in the figures). The fixing stand clamps the fixing groove. When the portable device is accommodated in the accommodating space, the fixing stand can prop the portable device upright. Typically, the portable device has functions of taking photographs, videos and playing video and audio. Therefore, an upright portable device facilitates operation of the portable device by the user.

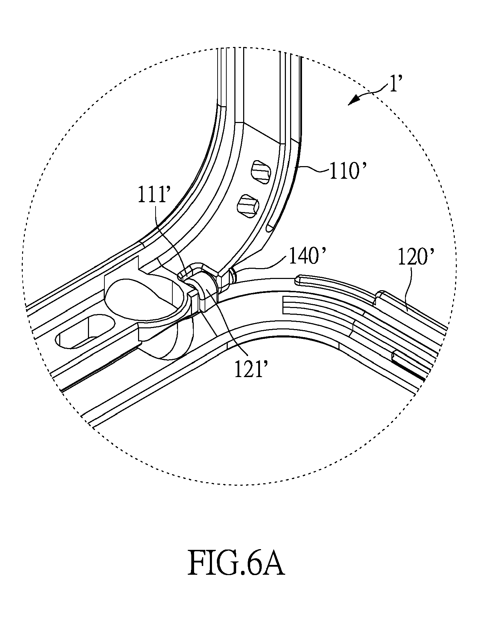

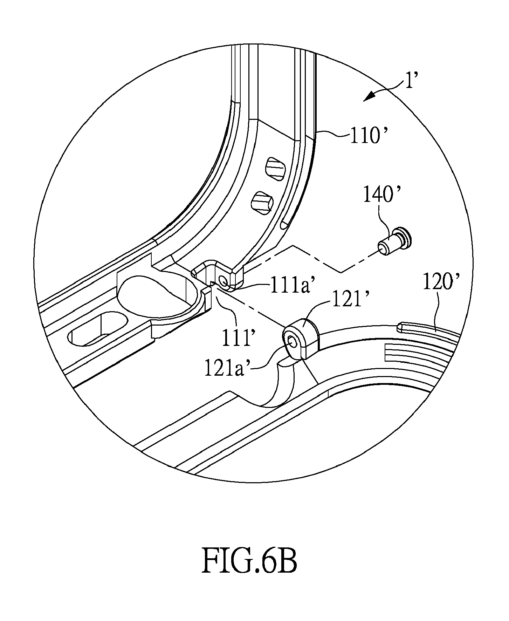

Fig. 6A shows an enlarged view of a portion of a protective cover 1' according to a second embodiment of the present disclosure. Fig. 6B shows an enlarged exploded view of a portion of the protective cover 1' according to a second embodiment of the present disclosure. Like Fig. 3A and Fig. 3B, Fig. 6A and Fig. 6B show an enlarged portion of the pivot portion at the bottom of the protective cover 1'. Referring to Fig. 6A and Fig. 6B, the protective cover 1' of the present embodiment is similar to that of the previous embodiment, and also includes a first frame 110' and a second frame 120'. A bottom portion of the first frame 110' and a bottom portion of the second frame 120' are connected, and the second frame 120' can rotate with respect to the first frame 110'.

However, different from the previous embodiment, two sides of the bottom portion of the first frame 110' are each formed only with a pivot groove 111', which has an alignment hole 111a'. Two sides of the bottom portion of the second frame 120' each have a pivot end 121', which has a through hole 121a'. Additionally, the protective cover 1' includes a pivot shaft 140'. In the present embodiment, the pivot shaft 140' is for example a screw, but the present disclosure is not limited thereto.

Referring to Fig. 6A and Fig. 6B, the position of the pivot end 121' is configured to align with the pivot groove 111'. When the pivot end 121' is disposed in the pivot groove 111', the alignment hole 111a' aligns with the through hole 121a'. The pivot shaft 140' is inserted in the alignment hole 111a' and the through hole 121a', for connecting the pivot end 121' and the pivot groove 111'. Specifically, the pivot shaft 140' is fixed in the alignment hole 111a', for pivoting the second frame 120' on the first frame 110'. Through insertion of the pivot shaft 140' into the through hole 121a' of the pivot end 121', the second frame 120' can pivot about the pivot shaft 140'. Additionally, the pivot shaft 140' is loosely attached in the pivot groove 111'. In other words, the second frame 120' is removably pivotally connected to the first frame 110'.

Additionally, in the present embodiment, the protective cover 1' can include a buffer pad (not shown in the figures) disposed inside the first frame 110'. When a portable device is accommodated in the accommodating space S, the buffer pad is sandwiched between the first frame 110' and the portable device, and serves as a buffer layer between the first frame 110' and the second frame 120'. However, in other embodiments, the buffer pad may be omitted from the protective cover 1'.

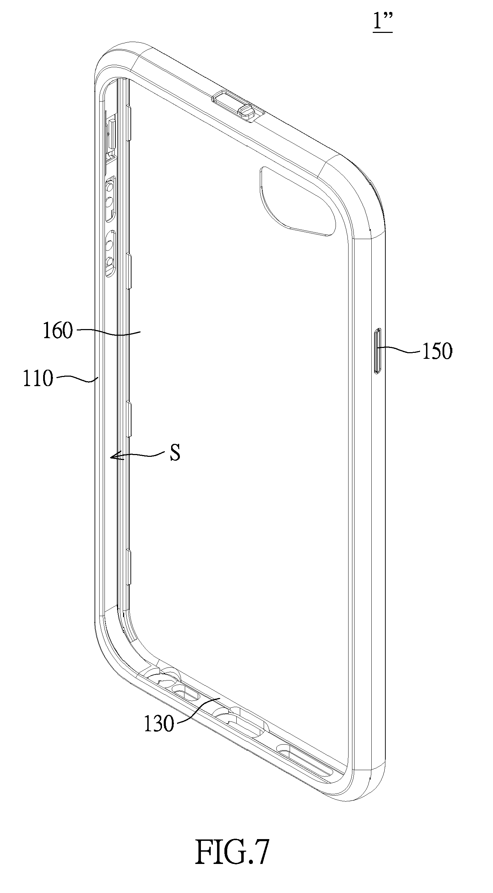

Fig. 7 shows a perspective view of a protective cover 1" according to a third embodiment of the present disclosure. Referring to Fig. 7, the protective cover 1" of the present embodiment is similar to that of the first embodiment, and also includes a first frame 110, a second frame 120, and a buffer pad 130. However, different from the first embodiment, the protective cover 1" further includes a back cover 160 disposed between the first frame 110 and the second frame 120. The back cover 160 abuts the second extension portion 120b of the second frame 120. When the portable device is accommodated in the accommodating space S, the back cover 160 is sandwiched between the portable device and the second frame 120.

The back cover 160 protects the back side of the portable device from scratches and impacts. Additionally, the back cover 160 can be made of a heat dissipating material for dissipating heat produced by the portable device during operation. Additionally, in other embodiments, the back cover 160 can be formed with patterns and colors for enhancing the aesthetic quality and identifiability of the protective cover. Specifically, the material of the back cover 160 can be the same as that of the first frame 110, or that of the second frame 120, but the present disclosure is not limited thereto.

In summary of the above, the present disclosure provides a protective cover for accommodating and protecting a portable device. The protective cover includes a first frame and a second frame. The first frame has a pivot groove, and the second frame has a pivot end. The protective cover can include a fixing unit or a pivot shaft. The fixing unit and the pivot shaft is inserted in the pivot groove and the pivot end. The first frame and the second frame can pivot about each other through the fixing unit or the pivot shaft, so that the first frame and the second frame can be parted from or closed upon each other. When the first frame and the second frame are closed upon each other, an accommodating space is defined therebetween for accommodating a portable device, thereby protecting the portable device from impacts and scratching.

The descriptions illustrated *supra* set forth simply the preferred embodiments of the present disclosure; however, the characteristics of the present disclosure are by no means restricted thereto. All changes, alterations, or modifications conveniently considered by those skilled in the art are deemed to be encompassed within the scope of the present disclosure delineated by the following claims.

## Claims

1. A protective cover (1) for accommodating a portable device, comprising:
a first frame (110, 110'), one side of which is formed with at least one pivot groove (111, 111');
a second frame (120, 120'), one side of which is formed with at least one pivot end (121, 121'), wherein each of the pivot ends (121, 121') is removably pivotally connected in the respective pivot groove (111, 111'), the first frame (110, 110') is rotatable with respect to the second frame (120, 120') for opening and closing the first frame (110, 110') and the second frame (120, 120'), each of the pivot grooves (111, 111') is formed with an alignment hole (111a'), each of the pivot ends (121, 121') is formed with a through hole (121a,121a'), when each of the pivot ends (121, 121') is disposed in the respective pivot groove (111, 111'), each of the alignment holes is aligned with the respective through hole (121a,121a'); and
at least one fixing unit (140') passing through one of the alignment holes and one of the through holes (121a,121a'), for pivotally connecting the pivot end (121, 121') in the pivot groove (111, 111');
wherein when the first frame (110, 110') and the second frame (120, 120') are closed upon each other, the first frame (110, 110') and the second frame (120, 120') define an accommodating space (S), and the portable device is accommodated in the accommodating space (S).

2. The protective cover (1) according to claim 1, further comprising a buffer pad (130) positioned inside the first frame (110, 110'), wherein when the portable device is accommodated in the accommodating space (S), the buffer pad (130) is positioned between the first frame (110, 110') and the portable device.

3. The protective cover (1) according to claim 2, further comprising at least one key (150) having a protruding portion (152), wherein the first frame (110, 110') further has a touch key window (113), the key (150) is disposed inside the touch key window (113), the buffer pad (130) has a fixing hole (138), the protruding portion (152) passes through the fixing hole (138), and when the portable device is accommodated in the accommodating space (S), the buffer pad (130) fixes the key (150) between the first frame (110, 110') and the portable device, and the key (150) is adjacent to a key (150) of the portable device.

4. The protective cover (1) according to claim 1, further comprising a fixing stand, wherein the first frame (110, 110') further has a fixing groove, and the fixing stand clamps the fixing groove, propping the portable device accommodated in the protective cover (1) on the fixing stand.

5. The protective cover (1) according to claim 1, wherein the first frame (110, 110') further comprises a first side wall (110a) and a first extension portion (110b) connected to the first side wall (110a), the first extension portion (110b) extends toward the center of the first frame (110, 110'), the second frame (120, 120') further comprises a second side wall (120a) and a second extension portion (120b) connected to the second side wall (120a), the second extension portion (120b) extends toward the center of the second frame (120, 120'), when the first frame (110, 110') and the second frame (120, 120') are closed upon each other, the first side wall (110a) is connected to the second side wall (120a), and the first extension portion (110b) and the second extension portion (120b) are positioned at two opposite sides of the protective cover (1).

6. The protective cover (1) according to claim 2, wherein the buffer pad (130) includes a first buffer portion (132), a second buffer portion (134), and a third buffer portion (136), the second buffer portion (134) is connected to the first buffer portion (132) and the third buffer portion (136), the first buffer portion (132) contacts the first extension portion (110b), and the second buffer portion (134) contacts the first side wall (110a), and when the first frame (110, 110') and the second frame (120, 120') are closed upon each other, the third buffer portion (136) is positioned between the first side wall (110a) and the second side wall (120a).

7. The protective cover (1) according to claim 1, wherein the first frame (110, 110') further includes a latch groove (115), the second frame (120, 120') further includes a latch hook (123), when the first frame (110, 110') and the second frame (120, 120') are closed upon each other, the latch hook (123) is latched onto the latch groove (115) for fastening the first frame (110, 110') and second frame (120, 120').

8. The protective cover (1) according to claim 1, further comprising a back cover (160) disposed between the first frame (110, 110') and the second frame (120, 120'), and in contact with the second frame (120, 120'), wherein when the portable device is accommodated in the accommodating space (S), the back cover (160) is positioned between the portable device and the second frame (120, 120').
